Europäisches Patentamt

European Patent Office

Office européen des brevets

(11) Publication number: **0 263 606**
**A2**

# EUROPEAN PATENT APPLICATION

(21) Application number: **87308153.3**

(22) Date of filing: **15.09.87**

(51) Int. Cl.⁴: **C04B 18/14**

(30) Priority: **29.09.86 US 912019**
**29.09.86 US 912018**

(43) Date of publication of application:
**13.04.88 Bulletin 88/15**

(84) Designated Contracting States:
**AT BE CH DE ES FR GB GR IT LI LU NL SE**

(71) Applicant: **W.R. GRACE & CO.**
**Grace Plaza 1114 Avenue of the Americas**
**New York New York 10036(US)**

(72) Inventor: **Rosenberg, Arnold Morry**
**11836 Goya Drive**
**Potomac Maryland 20854(US)**
Inventor: **Gaidis, James Michael**
**9991 Timberknoll Lane**
**Ellicott City Maryland 21043(US)**
Inventor: **Kindt, Lawrence Joseph**
**7110 Old Washington Road**
**Woodbine Maryland 21797(US)**

(74) Representative: **Collier, Jeremy Austin Grey et al**
**J.A.Kemp & Co. 14, South Square Gray's Inn**
**London WC1R 5EU(GB)**

(54) **Silica fume slurry.**

(57) The invention provides a stable, aqueous silica fume dispersion suitable for use as a cement-based composition admixture which contains 20 to 75% by weight of silica fume which is a by-product of 100% silicon production or 70-80% ferrosilicon production and a stabilizing agent.

EP 0 263 606 A2

## SILICA FUME SLURRY

The present invention is directed to the formation and utilization of a stabilized aqueous dispersion of silica fume in high concentration. The presently described aqueous dispersion provides a means to readily transport, meter and handle silica fume in highly concentrated form and for its easy utilization in various industrial applications. The composition described herein has been found highly suitable as an admixture for cementitious compositions to enhance its durability and strength characteristics.

During the commercial production of very high purity silicon metal or ferrosilicon alloys, the main by-product is a so-called silica fume. In the former case, the silica fume has a very high content of silicon dioxide while in the latter case the silicon dioxide is present in from about 80 to about 90 percent. The process of producing metallic silicon consists of feeding a charge of quartz, coal and wood chips into a furnace provided with carbon electrodes. At the high temperature developed at the bottom of the furnace, the silicon dioxide is reduced by the carbon to metallic silicon. The gaseous by-products are carbon monoxide, which oxidizes to carbon dioxide, and silicon suboxide which oxidizes to silicon dioxide as the gases pass to the top of the furnace. The particulate material which is the effluent of this process is called silica fume.

Silicon metal and alloys of silicon, such as ferrosilicon alloys, can be formed using the furnace described above. For a given product, one produces a condensed silica fume by-product that has a distinct, constant chemical composition and is characteristic of the silicon material being formed.

The powdery silica fume is very difficult to handle, transport and to use due to its low bulk density and fluffy nature. This material is, therefore, normally converted into aqueous dispersions so that its transportation, metering and general handling can be more readily accomplished. The problems with such dispersions are the poor economics associated with transporting large volumes of water when the dispersion has low concentrations (about 45% or less) of solids or the poor stability resulting in gelling and solidification of dispersions which have a high solid concentration (greater than about 45%).

Silica fume is known to enhance the strength of the cured cement based formation. However, to accomplish this desired result, the fumed silica must be used in large amounts. Whether used at the ready-mix site or added to the cement mix at the construction site, it is impractical to utilize dry silica fume due to its inherent transportation, handling and metering problems.

Silica fume is generally used to form low water to cement ratio cement compositions. Known stable and fluid dispersions of silica fume which are presently commercially available are not suitable for producing these compositions as the water content of the slurry far exceeds that required to provide the desired water to cement ratios. High content dispersions are known not to be stable nor storable under field conditions and do not retain their fluidity so as to be capable of uniformly mixing with the other components of the cement-based composition when utilized at the ready-mix or construction site.

British Patent Application 2,131,409-A discloses that aqueous dispersions of silica fume obtained from silicon and ferro-silicon production can be formed by including at least one non-high range water-reducing agent or at least one high range water reducing agent. These agents are lignin sulfonates, melamine derivatives or naphthalene derivatives as well as cellulose ethers, sugars, carbohydrates, certain zinc salts as well as certain hydroxylated carboxylic acids and their salts. Although this reference suggests that a vast number of water-reducing agents can be used to form a silica dispersion, it is well known that a number of these agents do not provide a stable dispersion suitable for being manufactured, stored, shipped and subsequently used.

Japanese Published Application 61-117143 shows the ineffectiveness of several of the agents taught in the above British reference. The Japanese reference shows that only lignin sulfonates (Ultrazin) and/or a $C_5$ -$C_{10}$ olefin/maleic anhydride copolymer (Work 500) reduces the viscosity of a silica fume dispersion. These dispersions, however, are not stable over extended time periods.

One object of the present invention is to provide an aqueous silica fume dispersion having a high solid content which is capable of retaining fluidity over an extended period of time.

An additional object of the present invention is to provide a stable, fluid, high content silica fume aqueous dispersion suitable for use in forming cement-based compositions, especially compositions having low water to cement ratios.

Still a further object of the present invention is to provide a silica fume aqueous dispersion which is stable at high temperatures.

Summary of the Invention

The present invention is directed to stable aqueous silica fume dispersions obtained from silicon metal or ferrosilicon alloy production. With respect to silicon fume from silicon metal production, the dispersion is stabilized by the presence in the dispersion of from 0.01 to 1 weight percent of an alkali metal polyacrylate salt wherein the alkali metal is selected from sodium or potassium. In the case of ferrosilicon metal production, the silica fume resulting therefrom can be formed into dispersions by the presence of from 0.25-1 percent of an agent selected from phosphoric acid, fluorosilic acid, hydrofluoric acid, citric acid, their sodium or potassium salts. These dispersions can be used as a cement admixture to aid in forming low water to cement ratio cement-based compositions.

Detailed Description of the Invention

The first silica fume found useful in the present invention is an amorphous silica by-product formed during conventional silicon metal production. The term "first silica fume" as used in the present application means a micro particulate by-product material retrieved from the stack gases of submerged electric arc furnaces or the like during production of silicon metal, that is, metals having more than 96 percent Si.

The main constituent of the silica fume is silicon dioxide present in at least 94 percent by weight. The analysis and properties of silica fumes suitable for use in forming the present stable aqueous dispersion is given below:

| Component | % by weight |
|---|---|
| $SiO_2$ | 94 - 98 |
| SiC | 0.2 - 0.7 |
| $Fe_2O_3$ | 0.02 - 0.15 |
| $TiO_2$ | 0.01 - 0.02 |
| $Al_2O_3$ | 0.1 - 0.4 |
| MgO | 0.2 - 0.9 |
| CaO | 0.1 - 0.3 |
| $Na_2O$ | 0.1 - 0.5 |
| $K_2O$ | 0.2 - 0.7 |
| S | 0.1 - 0.3 |
| C | 0.2 - 1.3 |
| P | 0.03 - 0.06 |
| Ignition loss (1000°C) | 0.8 - 1.5 |
| Bulk density, from bunker, g/L | 200 - 300 |
| Bulk density, compacted, g/L | 500 - 700 |
| Real density, g/cm$^3$ | 2.20 - 2.25 |
| Specific surface, m$^2$/g | 18 - 22 |
| Primary particle size, percentage 1 m | 90 |

3

Another silica fume found useful in the present invention is an amorphous silica by-product formed during conventional ferrosilicon metal alloy production. The term "second silica fume" as used in the present application means a micro particulate by-product material retrieved from the stack gases of electric arc furnaces or the like during production of a ferrosilicon alloy in which the iron to silicon metal content is in a ratio of 30:70 to 20:80. This product presents a silica fume by product having components relegated by the alloy production.

The main constituent of the subject silica fume is silicon dioxide present in from about 86 to about 90 percent by weight. The analysis and properties of typical silica fumes suitable for use in forming the present stable aqueous dispersion is given below:

| Component | % by weight |
|---|---|
| $SiO_2$ | 86 − 90 |
| SiC | 0.1 − 0.4 |
| $Fe_2O_3$ | 0.3 − 5.0 |
| $TiO_2$ | 0.02 − 0.06 |
| $Al_2O_3$ | 0.2 − 1.7 |
| MgO | 1.0 − 3.5 |
| CaO | 0.2 − 0.5 |
| $Na_2O$ | 0.3 − 1.8 |
| $K_2O$ | 1.5 − 3.5 |
| S | 0.2 − 0.4 |
| C | 0.8 − 2.3 |
| P | 0.03 − |
| Ignition loss (1000°C) | 2.4 − 4.0 |
| Bulk density, from bunker, g/L | 200 − 300 |
| Bulk density, compacted, g/L | 500 − 700 |
| Real density, $g/cm^3$ | 2.20 − |
| Specific surface, $m^2/g$ | 18 − 22 |
| Primary particle size, percentage 1 m | 90 |

By forming a dispersion with the additional components in the manner described hereinbelow, one can achieve a stable, fluid composition which contains up to 75 weight percent of first or second silica fume therein. The dispersion may contain less silica fume and the exact amount will be dictated by the end use to which it is intended. Dispersion may contain from about 20 to 75 weight percent, preferably from about 45 to 65 weight percent of either a first or second silica fume. Stable dispersions having silica fume in amounts of from at least 50 to 65 weight percent and most preferably from about 55 to 65 weight percent are highly desirable to form low water to cement ratio cement-based compositions.

To provide a stable, fluid first silica fume dispersion according to the subject invention requires the inclusion of from about 0.01 to 1 preferably 0.05 to 0.5 and most preferably from 0.05 to 0.25. weight percent of an alkali metal polyacrylate salt. The alkali metal is selected from sodium or potassium. The term "alkali metal polyacrylate" as used herein to describe this invention and in the appended claims refers to substantially neutralized salts of homopolymers formed from monomeric units of acrylic acid and methacrylic acid as well as copolymers of these monomers and mixtures of these polymers. In addition, the term "alkali metal polyacrylate" includes copolymers having its major monomeric unit selected from acrylic acid and methacrylic acid, as described above in combination with a minor amount of an olefinic double bond containing compound such as unsubstituted and substituted esters of acrylic and methacrylic acid,

4

vinyl acetate and the like. The resultant polyacrylate to be used herein should be in the form of a substantially neutralized salt of an alkali metal selected from sodium or potassium. The polyacrylate should be of low molecular weight such as of from about 1,000 to 20,000 and preferably from 2,000 to 15,000 weight average molecular weight.

The preferred polymer to be used in forming the subject first silica fume dispersion are substantial polyacrylate and polymethacrylate homopolymers or copolymers having less than about 10 percent of a comonomer group as described above. The preferred alkali metal forming salt is sodium. The sodium polyacrylate or potassium polyacrylate preferably has a molecular weight of from about 2,000 to 5,000. When the preferred polymer is sodium polymethacrylate or potassium polymethacrylate the molecular weight is preferably from 6,000 to 12,000.

To provide a stable, fluid second silica fume dispersion according to the present invention requires the use of silica fume by-product obtained from ferrosilicon alloy production which provide alloys with from about 70 to 80% silicon and a stabilizing agent selected from a phosphoric acid, such as the various known polyphosphoric acids; citric acid; or their sodium or potassium salts or mixtures thereof. The preferred materials are the sodium salts of the above mentioned free acids. The stability of the dispersion can be further enhanced by using, in combination with the above described stabilizing agents, a stabilizing agent selected from fluorosilicic acid, hydrofluoric acid or their sodium or potassium salts or mixtures thereof. The total stabilizing material should be present in the aqueous dispersion in amounts of from 0.25 to 1.0 and preferably from 0.4 to 0.85 weight percent.

The subject composition composed of (1) a first silica fume in high concentrations and an alkali metal polyacrylate polymer, as described above, or (2) a second silica fume and one or a mixture of the above described acids or their salts is a stable fluid product exhibiting low viscosity. In certain instances it is preferable to produce a fluid product having viscosities of up to about 2000 cP (centipoise) and preferably up to about 1000 cP. In certain instances, especially with first silica fume material, it has been found that this can be readily accomplished without detracting from the product's stability by using a thickening agent selected from a hydroxyalkyl cellulose, a carboxyalkyl cellulose or a polyalkylene oxide. The preferred materials are hydroxypropyl cellulose, carboxymethyl cellulose and polyethylene oxide. The thickening agent can be mixed simultaneously with the other components or added subsequent to the formation of the silica fume dispersion. The amount used will depend upon the desired viscosity of the product and can be readily determined by simple trials. The viscosity of the resultant product should be less than about 2000 cP and preferably less than about 1000 cP as measured at room temperature by standard technique using a Brookfield Viscometer with a No. 3 spindle at 60 rpm or an equivalent measuring device. The term "viscosity" as used herein and in the appended claims shall refer to the flow characteristics as determined by the above described technique.

The subject composition has been found to be exceptionally suitable for forming high strength cement based compositions such as mortar, cement and concrete compositions formed with a hydraulic cement such as Portland cement. The subject composition has, in particular, been found highly suitable for forming cement-based compositions having low water to cement ratios such as 0.45 or less (e.g., 0.25 to about 0.45) and can be used to form cement based compositions with water to cement ratios of 0.40 or less (e.g., 0.33 - 0.40). and even less than 0.37. This can be done with the present compositions because (1) they are capable of remaining fluid and are, therefore, readily dispersible in the cement-based composition; (2) they contain very high solid (silica fume) content and very little water; and (3) they are capable of exhibiting stability at elevated temperatures such as are encountered at storage facilities and at the mixing site.

The amount of the present first or second silica fume (solid) which can be added to a cement based composition can be up to about 25 weight percent based on the cement content. Preferably, from 1 to 20 and most preferably from 5 to 15 weight percent based on the cement content should be used to form a high strength cement formation. The silica fume normally replaces an equivalent portion of the aggregate used to form the cement-based composition. The resultant formation exhibits very high compressive strength of greater than 7000 psi and even greater than 9000 psi. This is believed, although not meant to be a limitation on the present invention, to be due to the combination of several factors, including the interaction of the silica fume with the cement to reduce bleeding known to occur in conventional mixes, the high content of silica fume in the resultant formation and the low water-to-cement ratio of the initially formed hydraulic cement based composition.

The following examples are given for illustrative purposes only and are not meant to be a limitation on the present invention as described herein and defined in the appended claims. All parts and percentages are by weight unless otherwise indicated.

EXAMPLES

Dispersion of First Silica Fume

Example 1

Into a high speed mixing apparatus was introduced 39.8 parts of water and 0.1 part of a commercially available sodium polyacrylate (polyacrylic acid neutralized to a pH of 7.0 with sodium hydroxide) having a weight average molecular weight of 7,000. To this solution was incrementally added 60 parts of silica fume produced as a by-product from electric-arc furnace production of silicon metal (substantially 100 percent silicon). Cation analysis of the silica fume was done by washing 50 gm of silica fume with 250 gm of dionized water, collecting the filtrate and analyzing by atomic absorption spectrometry. The cation concentration (in ppm) was: Al = 7.6; Ca = 50; Fe = 2.5; K = 240; Mg = 105; Mn = 7.4; Na = 120; Pb = 1.7; and Zn = 10.5.

The pH of the formed dispersion was 7.49 upon formation and 7.44 after 38 days. Viscosity of the sample was conducted using a Brookfield viscometer with a No. 3 spindle at 60 rpm. The initially formed dispersion had a viscosity of 120 cP. After 38 days of storage at ambient temperature, the dispersion exhibited slight settling but was very fluid. The sample was shaken and the measured viscosity was 120 cP.

Example 2

The dispersion was formed using the same material and procedure as described in Example 1 except that only 37.5 parts water were initially used and, subsequent to the addition of the silica fume, 2.5 parts of a 1 percent aqueous solution of a commercially available 2-hydroxypropyl cellulose (mol. wt. of 1,000,000). The total water used was about 39.9 parts.

The pH of the formed dispersion was 7.43 upon formation and 7.40 after 38 days. The sample exhibited slight settling after standing for extended periods but remained fluid. The sample was shaken prior to taking viscosity measurements. The initial viscosity was 910 cP and after 38 days was 1060.

Example 3

A dispersion was formed using the same material and procedure as described in Example 2 except that the sodium polyacrate used was Colloid 119 which is a product having a molecular weight of about 2,000.

The formed 60 percent silica fume dispersion had an initial pH of 7.24 and a viscosity of 914 cP. At seven days the viscosity was 808 cP and after 30 days of storage at ambient conditions the pH was 7.37 and the viscosity was 950. The dispersion remained fluid throughout.

Example 4

A 60 percent silica fume aqueous dispersion was formed in the manner described in Example 2 except that the silica fume by-product used was from a high purity silicon matal production (100% Si) which gave silica fume having very low content of extraneous metal (Al; Fe; K; Mg; Mn; Ma; Pb; Zn).

The dispersion was very fluid having a viscosity of 320 cP. The initial pH of the material was 7.2. After 5 days the viscosity was 340 cP and, after 36 days, the viscosity was 384 cP.

A sample of the above formed dispersion was treated for high temperature stability by placing a sample of the dispersion in a closed and sealed container and maintaining the sample at 50°C. The dispersion's viscosity was measured to be 280 cP after 24 hrs; 294 cP after 48 hrs; 274 cP after 5 days; 320 cP after 12 days; 324 cP after 19 days; and 470 cP after 26 days.

The above shows that a high silica fume content dispersion can exhibit stability and fluidity over an extended period both under ambient and high temperature conditions.

## Example 5

For comparative purposes, a dispersion was formed according to the teachings of British Patent Application 2,131,409-A which teaches that an aqueous dispersion of silica fume can be formed from an aqueous admixture of microsilica and at least one non-high range water-reducing agent or at least one high range water reducing agent.

An aqueous dispersion of silica fume was formed in the same manner as used in Example 4 above. To 39.9 parts of water was added 1.2 parts of a commercial sulfonated condensate of naphthalene-formaldehyde (as sodium salt) which is known as a high-range water reducing agent. To this solution was added 60 parts of silica fume obtained from a high purity silicon metal production as used in Example 4 above.

The formed dispersion was split into too samples in order to test one at ambient temperature and one at elevated temperature conditions.

The viscosity of the ambient temperature sample (23°C) was 174 cP initially; 212 cP after 2 days; 314 cP after 5 days; 810 cP after 12 days; 970 cP after 19 days and 1240 cP after 26 days.

The viscosity of the sample subjected to elevated temperature (50°C) was 818 cP after 1 day; 1,380 after 2 days; and resulted in a hard set material within 5 days.

The above data, when compared to that obtained in Example 4, above, demonstrates the instability of the prior art material and the ability of the presently described first silica fume dispersions to remain stable and fluid over extended periods of time.


Dispersions of Second Silica Fume

## Example 6

Into a vessel, equipt with a high speed stirrer, was placed 39.25 parts water, 0.5 part sodium tripolyphosphate and 0.25 part citric acid. 60 parts of a silica fume obtained from a commercial production of 75% ferrosilicon alloy was added slowly to the solution while rapidly stirring. The resultant dispersion was fluid, had a pH of 5.88 and a viscosity of 800 cP. The dispersion was observed to remain fluid during a three week storage under ambient conditions. The viscosity was measured periodically to be 800 cP after one week; 518 cP after two weeks; and 290 cP after three weeks.


## Example 7

A dispersion was formed in the same manner as described in Example 6 above except that 0.25 part of $Na_2SiF_6$ was used in place of the polyphosphate. The initial dispersion was a thick semifluid which upon aging for a short period became fluid. The viscosity at 4 days was 650 cP; at 8 days was 560 cP; and at 17 days was 380 cP.


## Example 8

A series of dispersions were formed in the same manner as described in Example 6 above except that the stabilizing agent was a combination of agents as indicated in the Table 1 below. In each case, the dispersion was fluid upon formation and remained fluid over an extended period. The viscosity of the dispersions were measured during the initial period of storage and reported below. All of the samples remained fluid over an extended period of storage.

7

## Table 1

| Sample | Stabilizing Agent (% by wt) | Age (days) | Viscosity cP | Condition |
|---|---|---|---|---|
| 1 | Citric Acid (0.5) NaF (0.25) | init. | 832 | |
| | | 1 | 472 | |
| | | 2 | 408 | fluid-no set |
| | | 3 | 442 | fluid-no set |
| | | 4 | 352 | fluid-no set |
| | | 7 | 336 | fluid-no set |
| 2 | Citric Acid (0.25) NaF (0.5) | init. | 378 | |
| | | 1 | 228 | fluid-no set |
| | | 2 | 410 | fluid-no set |
| | | 3 | 538 | fluid-no set |
| | | 4 | 230 | fluid-no set |
| | | 7 | 288 | fluid-no set |
| 3 | Citric Acid (0.25) NaF (0.25) $Na_2SiF_6$ (0.25) | init. | 778 | |
| | | 1 | 572 | |
| | | 2 | 416 | fluid-no set |
| | | 3 | 584 | fluid-no set |
| | | 4 | 354 | fluid-no set |
| | | 7 | 340 | fluid-no set |
| 4 | STPP* (0.25) Citric Acid (0.25) $Na_2SiF_6$ (0.25) | init. | 1,000 | |
| | | 1 | 884 | fluid-no set |
| | | 2 | 492 | fluid-no set |
| | | 3 | 348 | fluid-no set |
| | | 6 | 308 | fluid-no set |
| 5 | STPP* (0.25) Citric Acid (0.25) NaF (0.25) | init. | 980 | fluid-no set |
| | | 7 | 330 | fluid-no set |
| | | 16 | 290 | fluid-no set |

*STPP = Sodium tripolyphosphate

## Claims

1. A silica fume-based admixture for cement-based compositions in the form of an aqueous dispersion containing from 20 to 75 weight percent of a silica fume by-product obtained either from (a) silicon metal production or from (b) 70 to 80 percent ferrosilicon metal alloy production and either from 0.01 to 1 weight percent of an alkali metal polyacrylate in the case of silica fume (a) or from 0.25 to 1 percent of a stabilizing agent in the form of a phosphoric acid, citric acid, a sodium or potassium salt of a said acid or a mixture thereof, in the case of silica fume (b).

2. An admixture according to Claim 1 containing silica fume (a) and a sodium salt of a polyacrylic acid or polymethacrylic acid.

3. An admixture according to Claim 1 containing silica fume (b) and sodium or potassium tripolyphosphate.

4. An admixture according to Claim 2 which further comprises a hydroxyalkyl cellulose, carboxyalkyl cellulose or polyalkylene oxide in an amount sufficient to enhance stability and viscosity.

5. An admixture according to Claim 4 comprising from 50 to 65 weight percent of the silica fume and hydroxypropyl cellulose, carboxymethyl cellulose or polyethylene oxide.

6. An admixture according to any one of claims 1 to 5 wherein the silica fume is present in the dispersion in a proportion from 45 to 65 percent.

7. An admixture according to any one of claims 1 to 6 having a viscosity of less than 2000 cP.

8. A process of forming a cement-based composition comprising forming a mixture of hydraulic cement and particulate material, adding the composition of any of the Claims 1-7 to the said mixture, and adding sufficient water to the mixture to provide a water to cement weight ratio from about 0.25 to 0.45.